# EUROPEAN PATENT APPLICATION

(11) **EP 4 269 506 A2**
(43) Date of publication of application: **01.11.2023**
(21) Application number: 23169852.3
(22) Date of filing: 25.04.2023
(51) Int. Cl.: C09B 57/00, C09B 67/44, G01N 21/78

(54) **DESIGN AND SYNTHESIS OF NOVEL MOLECULES FOR THE FLUORIMETRIC DETECTION OF CYANIDE, HYDRAZINE AND HYPOCHLORITE SIMULTANEOUSLY WITH DIFFERENT CHANNELS**

(30) Priority: 27.04.2022 TR 202206893
(71) Applicant: Tubitak, 06680 Ankara (TR)
(72) Inventor: KARAKU , Erman, 41470 Kocaeli (TR); SUNA, Garen, 41470 Kocaeli (TR); GÜNDÜZ, Simay, 41470 Kocaeli (TR); ÖZTÜRK, Turan, 41470 Kocaeli (TR)

(57) **Abstract**

In the present invention, a novel fluorescent sensor molecule (Probe I) (II) that responds from three different channels has been developed to detect cyanide, hydrazine and hypochlorite. Thanks to this sensor, very different from the examples in the literature, for the first time, these three analytes were detected quickly and with high sensitivity through three different channels (based on the principle of showing different fluorescence properties by performing different chemical reactions) without changing any ambient conditions and excitation wavelength. While the sensor molecule does not show any emission in the solution medium, it is white when cyanide is added, green when hydrazine is added, and orange when hypochlorite is added (λex = 360 nm). Three analytes (cyanide, hydrazine and hypochlorite) can be easily distinguished due to this sensor molecule, which does not respond to all other analytes.

## Description

### Technical Field of the Invention

The present invention relates to the design and synthesis of new and novel sensor molecules for detecting chemicals such as cyanide, hydrazine and hypochlorite that are harmful to the environment and human health.

The sensor molecules, synthesized within the scope of the invention, show different fluorescence (triple response) for each analyte in the presence of cyanide, hydrazine and hypochlorite, thus, revealing that these analytes can be detected and distinguished from each other. The present invention describes all possible structures of the probe molecule (I) for detection of cyanide, hydrazine and hypochlorite, and also the synthesis of Probe I (II), having similar structure with the probe (I) molecule, and the detection of cyanide, hydrazine and hypochlorite with Probe I (II).

### Prior Art

Cyanide compound plays essential roles in many industrial processes. Chemical syntheses, metallurgy, plastics production, gold and silver extraction are some of the cyanide usage. However, highly toxic cyanide causes severe damage to human health, even death, depending on the amount of exposure. According to the values determined by the World Health Organization, the amount of cyanide allowed in drinking water is 1.9 µM. Therefore, the release of cyanide into the environment causes serious problems.

Similarly, hydrazine gas, which plays an essential role in fields such as chemistry, agriculture and industry, is a hazardous chemical and threatens human health due to its carcinogenic and mutagenic properties. Inhaling excessive amounts of hydrazine gas causes various diseases. Some of them are pulmonary oedema, cancer, stroke and neurological diseases. The threshold limit value of dangerous hydrazine is 10 ppb (0.312 µM), according to the value determined by the United Nations Environmental Protection Agency (EPA).

On the other hand, hypochlorite is a member of reactive oxygen species and plays an essential role in biological and pathological events. However, it is also known that high dose of hypochlorite cause various diseases, such as tissue damage, neurodegeneration and cancer. Therefore, developing a rapid and accurate method to detect cyanide, hydrazine, and hypochlorite is very important for the environment and human health.

Fluorescent sensors are widely used to detect various analytes (heavy metals, anions, biological reagents, reactive oxygen species, etc.) due to their high sensitivity and selectivity, fast detection times, cheapness, ease of use, real-time visualization and detection with naked eye.

Considering the studies in the literature, none of the developed fluorescent sensor molecules can detect cyanide, hydrazine and hypochlorite analytes simultaneously. Furthermore, few studies in the literature can detect only two of these analytes (cyanide and hypochlorite, hydrazine and hypochlorite, and cyanide and hydrazine). For example, a fluorescent sensor, developed using a carbazole-based molecule, detected cyanide and hypochlorite, but both solvent conditions (solvent type, solvent amount) and ambient condition (pH) had to be changed for the detection of these two analytes. This situation is not practical in terms of applicability [1]. On the other hand, hydrazine and hypochlorite analytes were detected with a fluorescent molecule based on coumarin and barbituric acid. However, in this study, the amount of solvent need to be changed to detect these two analytes [2]. In another study, a fluorescent molecule, based on rhodamine dye, was developed to detect cyanide and hydrazine [3].

When the literature on the simultaneous fluorimetric detection of cyanide, hydrazine and hypochlorite analytes was examined, the following patent documents were found regarding the In the Chinese patent document numbered CN103159682 (B), the detection of these ions was carried out selectively based on the principle that the 2-aminobenzimidazole-based Schiff base gives a fluorescent signal when it encounters cyanide ions.

In the Chinese patent document numbered CN102879369 (A), selective detection of cyanide ions was carried out by using a sensor molecule (2,2'-biphenyl imidazole) again by utilizing fluorescence emission changing.

The Chinese patent document numbered CN105400508 (A) reveals the detection of hydrazine molecules by fluorescent methods using a naphthalimide derivative.

In the Chinese patent document numbered CN104109126 (B) a ratiometric fluorescent probe was developed to detect hydrazine molecule

In the Chinese patent document numbered CN104710976 (B), a sensor molecule was developed based on fluorescein dye to detect hypochlorite ions by the fluorescent method.

Another patent document describing the detection of hypochlorite is the Chinese patent document CN105441065 (B). In this document, a fluorescein dye-based probe was preferred, and hypochlorite ions were selectively detected.

In all patent documents mentioned above, including the state of art, different sensor molecules were prepared to determine each analyte, and these molecules could detect only one analyte specifically. However, the sensor molecule (I) developed in the curent invention, and the synthesized Probe I sensor molecule (II) with this molecular structure were able to detect cyanide, hydrazine and hypochlorite simultaneously with a high sensitivity by showing different fluorescence emission properties. Thus, 3 different analytes were detected with a single molecule. Thanks to the sensor molecule developed in the present invention, time, labor and cost loss are minimized.

### Technical Problem and Technical Solution that Invention Aims to Solve

Although there are sensor molecules in the literature that can detect cyanide, hydrazine and hypochlorite analytes, these molecules can detect only one or at most two of these analytes simultaneously. There are no studies in the literature that can detect these three analytes. The reason is that such molecules give specific reactions with three different analytes, and the products formed do not have different photo-physical and photochemical properties. Molecule design is essential to ensure this condition, and such molecules have not been designed so far. In addition, there are some weak points in some studies in the literature detecting only two analytes, which can be described as the closest to our invention. For example, one analyte can be detected in another solvent and pH, while the other analyte can be detected in a quite different solvent and at a different pH. Another weak point is that the device settings or the light source need to be changed according to the analyte to be detected. Since these cases require a sample preperation procedure each time, they recede into the background in applicability and convenience. However, thanks to the sensors developed within the scope of the present invention, cyanide, hydrazine and hypochlorite analytes can be detected quickly, easily, selectively and giving three different responses by a fluorescnece spectrophotometer or a simple UV lamp without changing any ambient conditions (solvent type, solvent ratio, pH, excitation wavelength, device, light source, etc.).

### Description of Figures

**Figure 1****.** General representation of all possible structures of the probe molecule (I)
**Figure 2****.** Open molecular structure of Probe I (II)
**Figure 3****.** Time-dependent variation of fluorescence emission intensity in the presence of CN⁻ (cyanide) of Probe I (II)
**Figure 4****.** Change of fluorescence emission intensity of Probe I (II) due to CN⁻ and other anions
**Figure 5****.** Change of fluorescence emission intensity of Probe I (II) due to CN⁻ addition in the presence of other anions in the medium

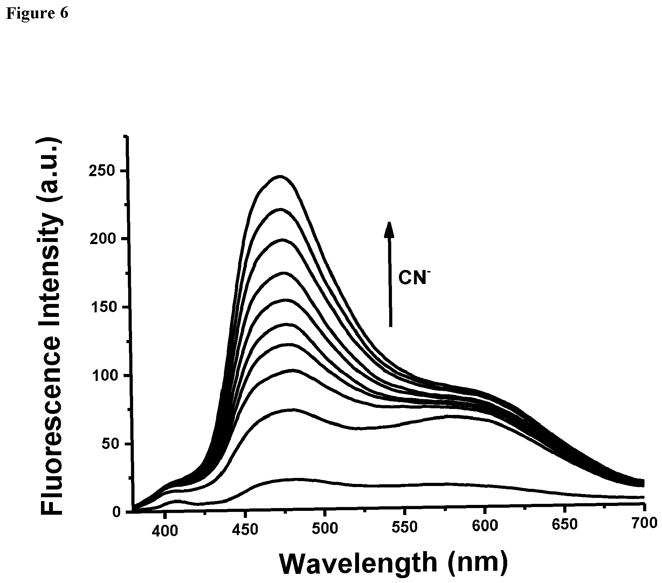

**Figure 6****.** Change of fluorescence emission intensity as a result of titration of Probe I (II) with different concentrations of CN⁻
**Figure 7****.** Time-dependent variation of fluorescence emission intensity in the presence of N₂H₄ (hydrazine) of Probe I (II)
**Figure 8****.** Change of fluorescence emission intensity of Probe I (II) due to N₂H₄ and other analytes
**Figure 9****.** Change of fluorescence emission intensity due to N₂H₄ addition of Probe I (II) in the presence of other analytes

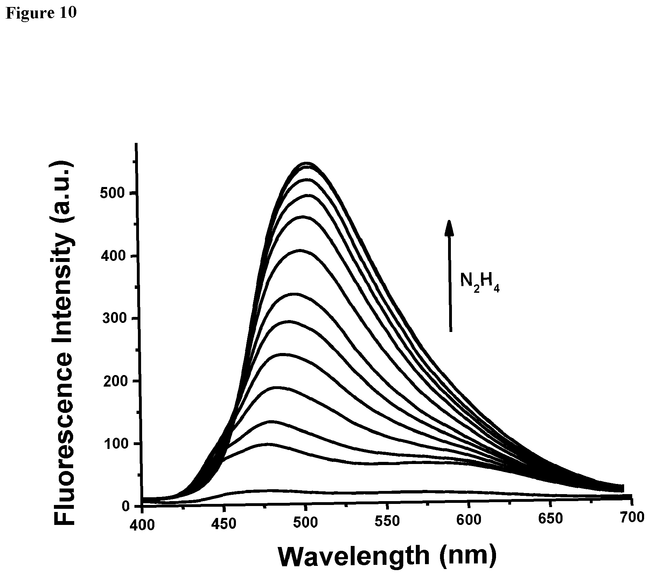

**Figure 10****.** Change of fluorescence emission intensity as a result of titration of Probe I (II) with different concentrations of N₂H₄
**Figure 11****.** Time-dependent variation of fluorescence emission intensity in the presence of CIO (hypochlorite) of Probe I (II)
**Figure 12****.** Variation of fluorescence emission intensity of Probe I (II) due to ClO⁻ and other analytes
**Figure 13****.** Change of fluorescence emission intensity due to ClO- addition of Probe I (II) in the presence of other anions

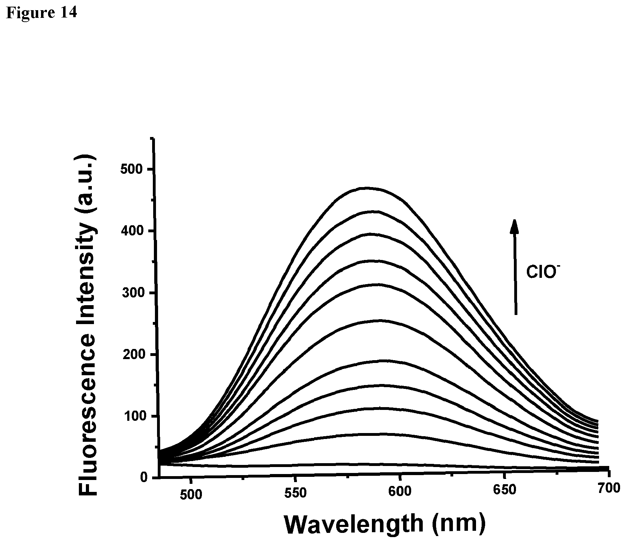

**Figure 14****.** Variation of fluorescence emission intensity as a result of titration of Probe I (II) with different concentrations of ClO⁻
**Figure 15****.** Absorbance graph obtained by adding CN , N₂H₄ and ClO⁻ on Probe I (II)
**Figure 16****.** Fluorescence graph obtained by adding CN⁻, N₂H₄ and ClO⁻ on Probe I (II)
**Figure 17****.** Schematic representation of the fluorescence emission of the Probe I molecule (II) in different colors in the presence of cyanide, hydrazine and hypochlorite
**Figure 18****.** Open molecular structure of 5-(5-(4-(diphenylamino)phenyl)-3-(4-fluorophenyl)thieno[3,2-b]thiophen-2-yl)thiophene-2-carbaldehyde
**Figure 19****.** Open molecular structure of 1,3-diethyl-2-thiobarbituric acid
**Figure 20****.** Schematic representation of the synthesis of the Probe I molecule (II)

### Description of the References in Figures

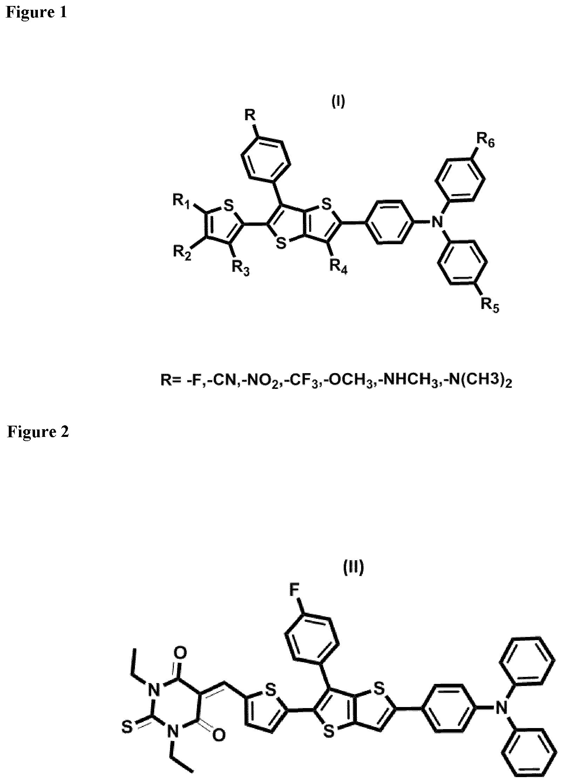

### Description of the references in Figure 1:

### (I): Probe molecule

### Description of the references in Figure 2:

### (II): Probe I molecule

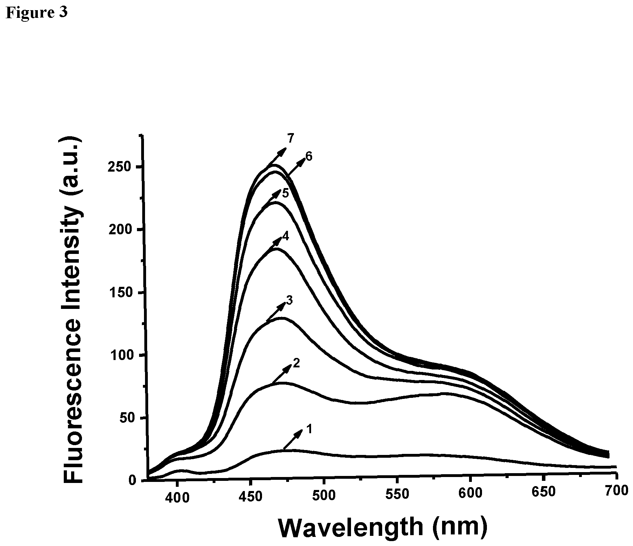

### Description of the references in Figure 3:

**1:** Fluorescence emission intensity of Probe I (II) before adding CN⁻
**2:** Fluorescence emission intensity of Probe I (II) 30 seconds (s) after adding CN⁻
**3:** Fluorescence emission intensity of Probe I (II) 1 minute (min) after adding CN⁻
**4:** Fluorescence emission of Probe I (II) 2 minutes after adding CN⁻
**5:** Fluorescence emission of Probe I (II) 3 minutes after adding CN⁻
**6:** Fluorescence emission of Probe I (II) 4 minutes after adding CN⁻
**7:** Fluorescence emission intensity of Probe I (II) 5 minutes after adding CN⁻
**a.u :** arbitrary unit (Optional/random unit)

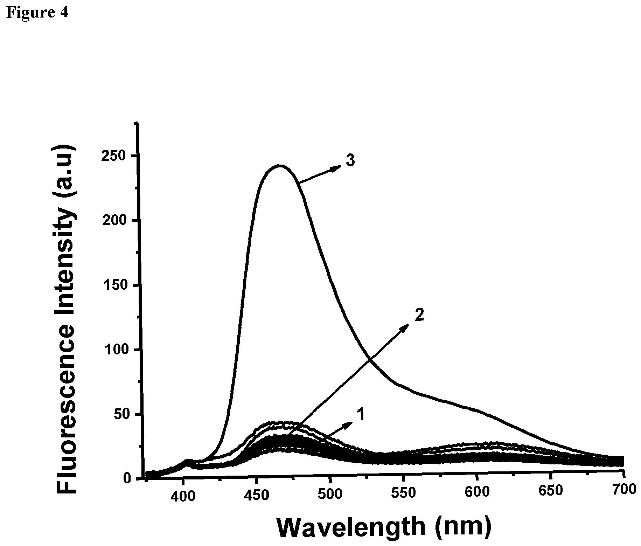

### Description of the references in Figure 4:

**1:** Fluorescence emission intensity of Probe I (II) before adding CN⁻
**2:** Fluorescence emission intensity in the presence of other anions in the medium (Other anions: F⁻, Cl⁻, Br⁻, I⁻, CO₃⁻; S₂O₃²⁻, K₃PO₄³⁻, S²⁻, NO₂⁻, NO₃⁻, H₂PO₄⁻, ClO₄⁻, SCN⁻, AcO⁻ , SO₄²⁻, SO₃²⁻, S₂O₃²⁻, N₃⁻,
**3:** Change in fluorescence emission intensity of Probe I after adding CN⁻

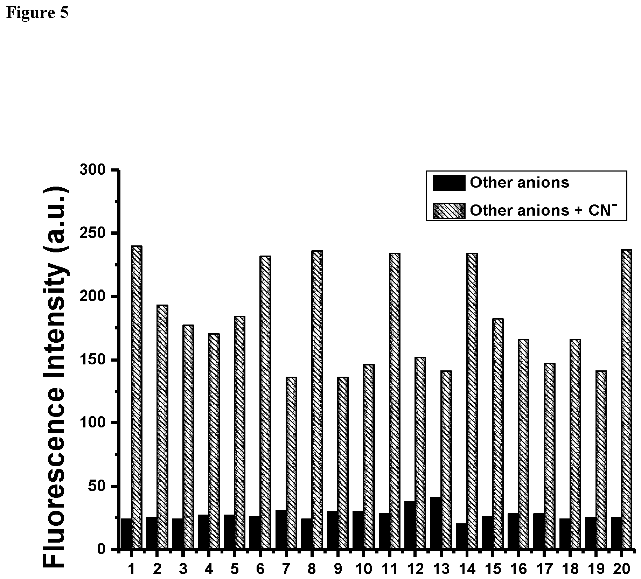

### Description of references in Figure 5:

**1:** CN-; **2:** F; **3:** Cl-; **4:** Br⁻; **5:** I⁻; **6:** SO₄²⁻; **7:** CO₃²⁻; **8:** PO₄³⁻, **9:** AcO-; **10:** S²⁻; **11:** SO₃²⁻ ; **12:** N₃; **13:** SCN-; **14:** ClO₄⁻; **15:** NO₂⁻; **16:** NO₃⁻; **17:** HCO₃⁻; **18:** S₂O₃²⁻; **19:** HPO₄⁻; **20:** H₂PO₄²⁻.

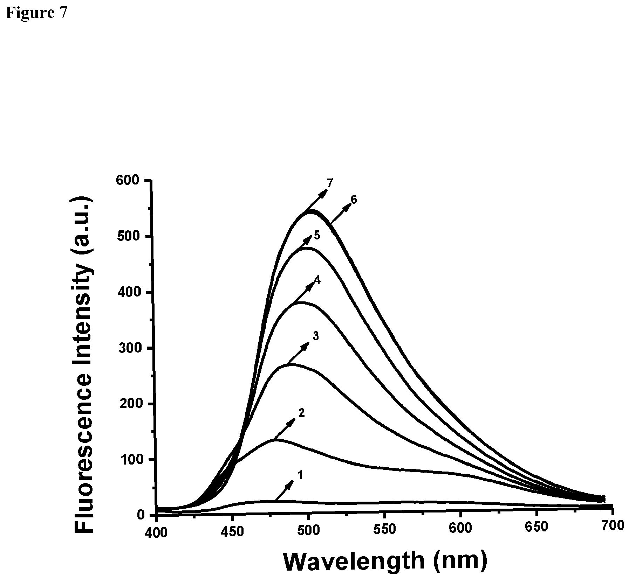

### Description of the references in Figure 7:

**1:** Fluorescence emission intensity of Probe I (II) before adding N₂H₄ is added
**2:** Fluorescence emission intensity of Probe I (II) 30 seconds after adding N₂H₄
**3:** Fluorescence emission intensity of Probe I (II) 1 minute after adding N₂H₄
**4:** Fluorescence emission intensity of Probe I (II) 2 minutes after adding N₂H₄
**5:** Fluorescence emission intensity of Probe I (II) 3 minutes after adding N₂H₄
**6:** Fluorescence emission intensity of Probe I (II) 4 minutes after adding N₂H₄
**7:** Fluorescence emission intensity of Probe I (II) 5 minutes after adding N₂H₄

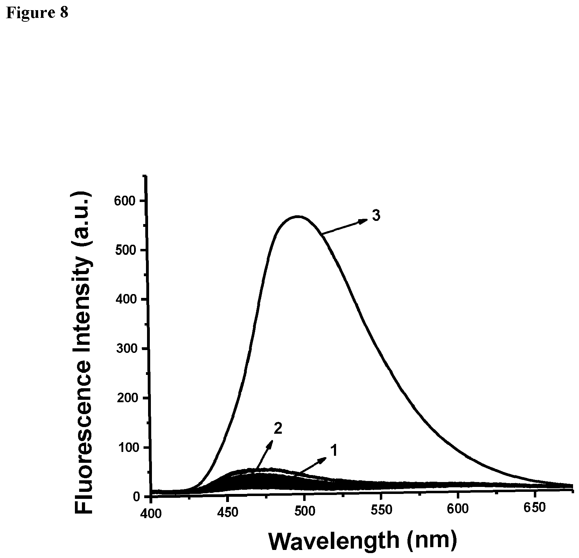

### Description of the references in Figure 8:

**1:** Fluorescence emission intensity of Probe I (II) before adding N₂H₄ (Hydrazine)
**2:** Fluorescence emission intensity in the presence of other analytes in the environment (Other analytes: Zn²⁺, Hg²⁺, Ag⁺, Ce³⁺, EDTA, pyridine, urea, triethylamine, aniline, DMF, n-ethyldiisopropylamine, o-phenylenediamine, triphenylamine (TPA), tribenzilamine)
**3:** Change in fluorescence emission intensity of Probe I (II) after adding N₂H.

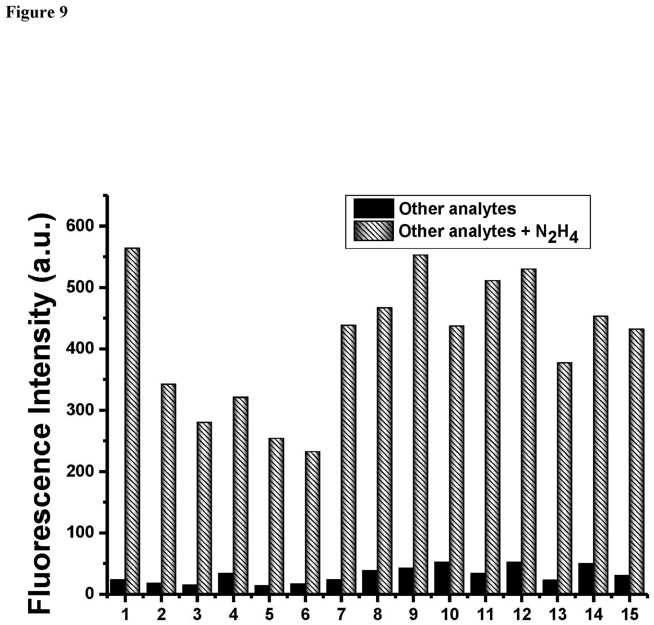

### Description of the references in Figure 9:

**1:** N₂H₄; **2:** Zn²⁺; **3:** Hg²⁺; **4:** Ag⁺; **5:** Ce³⁺; **6:** EDTA; **7:** pyridine; **8:** urea; **9:** triethylamine; **10:** aniline; **11:** DMF; **12:** n-ethyldiisopropylaminie; **13:** o-phenylenediamine; **14:** triphenylamine; **15:** tribenzilamine.

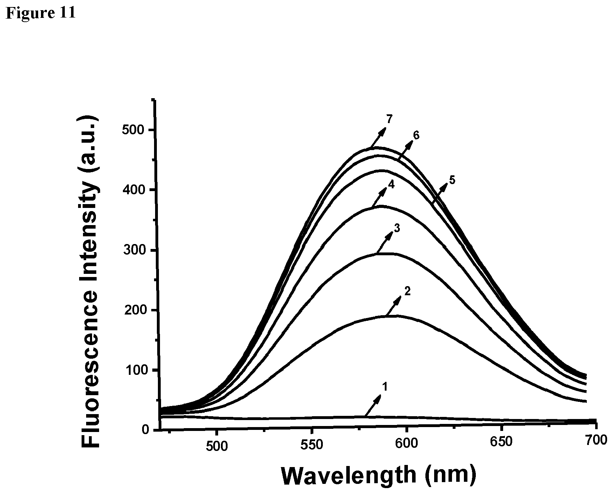

### Description of references in Figure 11:

**1:** Fluorescence emission intensity of Probe I (II) before adding ClO- (hypochlorite)
**2:** Fluorescence emission intensity of Probe I (II) 30 seconds after adding ClO⁻
**3:** Fluorescence emission intensity of Probe I (II) 1 min after adding ClO⁻
**4:** Fluorescence emission intensity of Probe I (II) 2 minutes after adding ClO⁻
**5:** Fluorescence emission intensity of Probe I (II) 3 minutes after adding ClO⁻
**6:** Fluorescence emission intensity of Probe I (II) 4 minutes after adding ClO⁻
**7:** Fluorescence emission intensity of Probe I (II) 5 minutes after adding ClO⁻

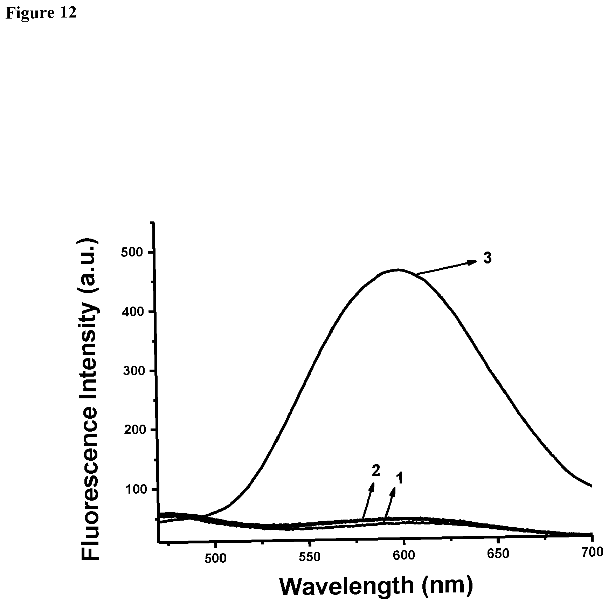

### Description of references in Figure 12:

**1:** Fluorescence emission intensity of Probe I (II)
**2:** Fluorescence emission intensity in the presence of other analytes in the environment (Other analytes: Ca²⁺, Ba²⁺, Mg²⁺, K⁺, Na⁺, H₂O₂, NO·, ROO·
**3:** Change in fluorescence emission intensity of Probe I (II) after adding ClO⁻

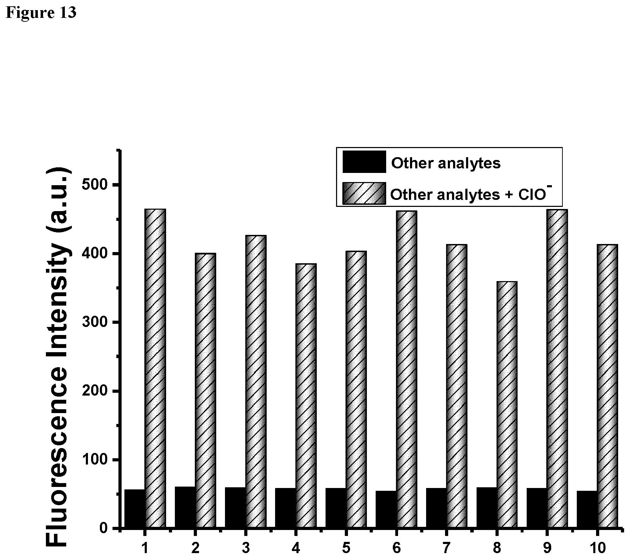

### Description of references in Figure 13:

**1:** ClO⁻; **2:** Li⁺; **3:** Ca²⁺; **4:** Ba²⁺; **5:** Mg²⁺; **6:** K⁺; **7:** Na⁺; **8:** H₂O₂; **9:** NO ; **10:** ROO·

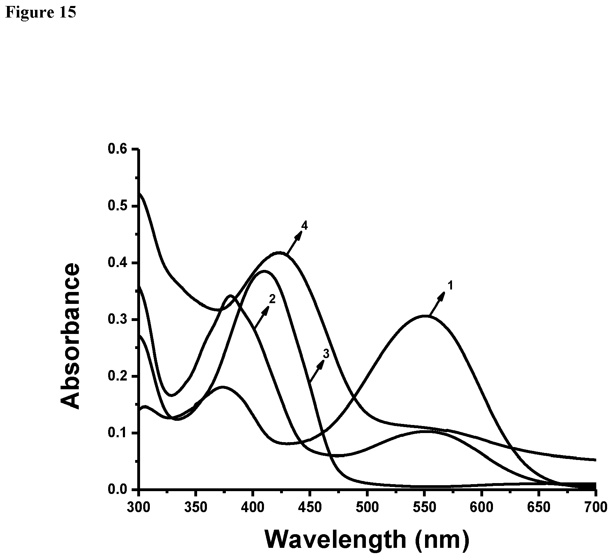

### Description of references in Figure 15:

**1:** Absorption intensity of Probe I (II),
**2:** Absorption intensity of Probe I (II) after adding CN⁻
**3:** Absorption intensity of Probe I (II) after adding N₂H₄
**4:** Absorption intensity of Probe I (II) after adding ClO⁻

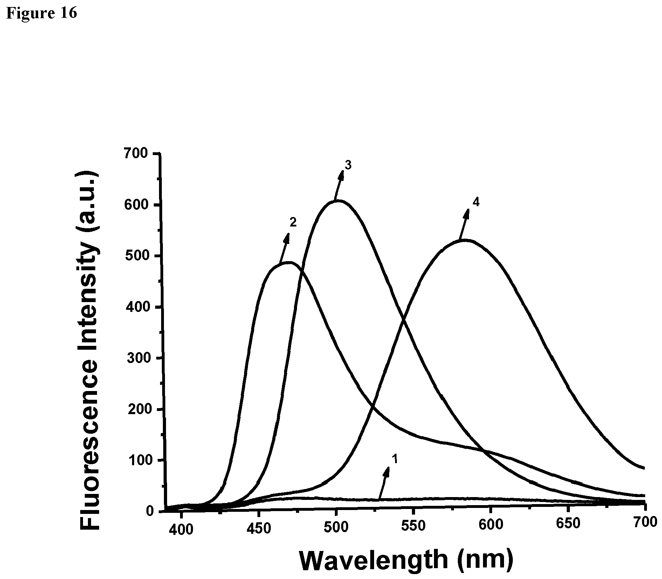

### Description of references in Figure 16:

**1:** Fluorescence emission intensity of Probe I (II)
**2:** Fluorescence emission intensity of Probe I (II) after adding CN⁻
**3:** Fluorescence emission intensity of Probe I (II) after adding N₂H₄
**4:** Fluorescence emission intensity of Probe I (II) after adding ClO⁻

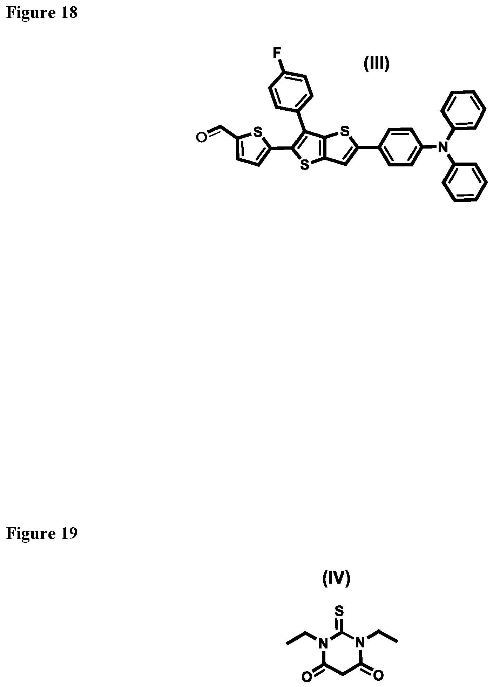

### Description of references in Figure 18:

### III: Open molecular structure of 5-(5-(4-(diphenylamino)phenyl)-3-(4-fluorophenyl)thieno[3,2-b]thiophen-2-yl)thiophene-2-carbaldehyde

### Description of the references in Figure 19:

### IV: Open molecular structure of 1,3-diethyl-2-thiobarbituric acid

### Disclosure of the Invention

This invention aims to design and synthesis of new and novel molecules that can detect cyanide, hydrazine and hypochlorite analytes to perform simultaneous fluorimetric detection (by revelaing different fluorescent changes) of cyanide, hydrazine and hypochlorite analytes, which are very harmful to the environment and human health. The molecules in the present invention are designed in a "donor-π bridge-acceptor" structure. In the synthesis of molecules, triphenylamine and thieno[3,2-b]thiophene are linked by the Suzuki coupling reaction. Here, triphenylamine is used as an electron donor group. Triphenylamine has the property of donating electrons to the neighboring groups with the unshared electrons of the central nitrogen atom. In this respect, it is known as a strong donor. Thienothiophenes have been used as pi bridges because of containing sulfur atoms and their conjugated structure. In the molecule (I), whose general chemical structure is given in Figure 1; "R"; -F (fluoride), -CN (cyanide), -NO₂ (nitro), -CF₃ (trifluoromethyl), -OCH₃ (methoxy), -NHCH₃ (methylamine) and -N(CH₃)₂ (dimethylamine), expresses at least one of these groups. The "R" group refers to the indispensable constant groups for the Probe molecule (I). Any of these groups, defined as the R group, must be present in the Probe molecule (I) structure. Other groups are defined as R¹, R², R³, R⁴, R⁵ and R⁶. R¹, R², R³, R⁴, R⁵ and R⁶ refer to groups from 1 atom to 500 atoms, which can be the same or different, consisting of molecules, chains or groups. R¹, R², R³, R⁴, R⁵ and R⁶ may consist of one or more alkyl, aryl, alkenyl, amine, ester, carbonate ester, carbonyl, sulfide, organosilane and thiolate groups. This means that these groups may all be the same or different. For example, two of them could be the same, four of them could be different, or all combinations similar to that. For example, R¹= R² or R⁴=R⁵ or R³=R⁴= R⁵=R⁶ or R¹= R²= R³= R⁴=R⁵. When examining the open molecular structure of the probe molecule (I) (Figure 1), it is an obligation that the thiophene and triphenylamine groups are bound (fixed) to the carbon atom adjacent to the sulfur atoms in thieno[3,2-b]thiophene. On the other hand, the other carbon atom adjacent to the carbon atom attached to the thiophene ring must also be a phenyl ring containing a (fixed) R group.

At the same time, the compounds containing a mixture or formulation (from 1 atom to 500 atoms and may contain different groups) or their devices, including all possible fluorescent sensors (under the same ambient conditions), charge transfer compounds, electrical conductors, semi-conductors, photo-conductors, light-emitting materials, and electronic, optical, electro-optical, electroluminescent, and photoluminescent materials are also within the scope of this invention.

Within the scope of this invention, Probe I (II), a unique three-channel fluorescent sensor molecule with a probe molecule (I) structure, has been developed for the detection of cyanide, hydrazine and hypochlorite (Figure 2). Chemical name of Probe I is 5-((5-(5-(4-(diphenylamino)phenyl)-3-(4-fluorophenyl)thieno[3,2-b]thiophen-2yl)thiophen-2-yl) methylene)-1,3-diethyl-2-thioxodihydropyrimidine-4,6(1H,SH)-dione. Thanks to this sensor molecule, very different from the examples in the literature, the detection of these three analytes for the first time, based on the principle of showing different fluorescence properties by performing different chemical reactions through three different channels without changing any ambient conditions (pH, solvent type, solvent ratio, etc.) and excitation wavelength, was carried out quickly and with high precision.

Probe I molecule (II) contains triphenylamine (TPA), thieno[3,2-b]thiophene, barbituric acid and phenyl ring groups with R moiety (Figure 2). Barbituric acid has electron-withdrawing (acceptor) property; thanks to the heteroatoms, such as nitrogen, oxygen and sulfur, they contain. Therefore, barbituric acid is frequently used as an acceptors in the literature.

In the Probe I molecule (II) structure, the thiophene and triphenylamine groups must be attached to the carbon atom adjacent to the sulfur atom in thieno[3,2-b]thiophene. In addition, the other carbon atom adjacent to the carbon atom attached to the thiophene ring must also be a phenyl ring containing a (fixed) R group. Initially, triphenylamine and thieno[3,2-b]thiophene were linked to each other by Suzuki coupling reactions in the synthesis of Probe I molecule, then, aldehyde function on the thieno[3,2-b]thiophene side was connedted with barbituric acid through Knoevenagel condensation. Triphenylamine was used as an electron donor group.

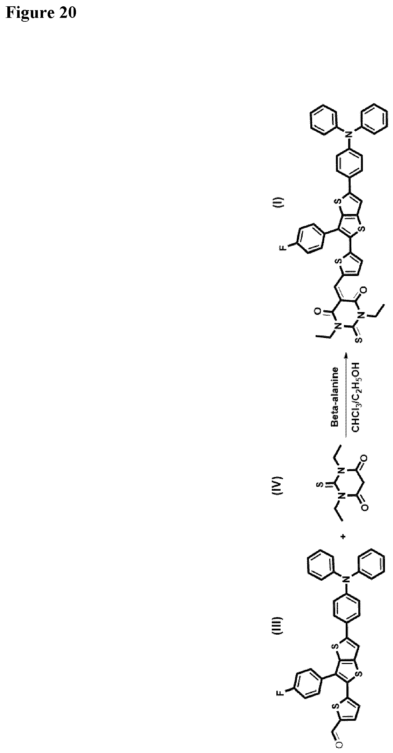

The following steps were performed sequentially to synthesise the Probe I molecule (II).
i) To a solvent mixture of 10 mL of chloroform:ethanol (1:1, v/v) in a reaction flask is introduced 0.1-1.0 mmol of 5-(5-(4-(diphenylamino)phenyl)-3-(4-fluorophenyl) thieno[3,2-b]thiophen-2-yl)thiophene-2-carbaldehyde (1 eq) (Fig. 18), 1,3-diethyl-2-thiobarbituric acid (3 eq) between 0.3-3.0 mmol (Fig. 19 ) and 10-100 mmol beta-alanine (100 equivalents) (Fig. 20) to obtain the mixture.
ii) This reaction flask is placed on a magnetic heater-stirrer to ensure homogeneous solution of the reagents.
iii) The temperature of the mixture is adjusted to 60-80 °C, and the reaction is continued at this temperature for 16-24 hours.
iv) Formation of the product is followed by thin-layer chromatography (TLC). After observing the consumption of the starting reagents, (5-(5-(4-(diphenylamino)phenyl)-3-(4-fluorophenyl)thieno[3,2-b]thiophen-2-yl)thiophene-2-carbaldehyde (III) and 1,3-diethyl-2-thiobarbituric acid, the resultant product is obtained by precipitation with methanol at 0-10 °C and filtering. The color of the obtained Probe I sensor molecule (II) (solid material) is purple close to black, and the reaction yield is 96%.
v) The resulting Probe I sensor molecule (II) is characterized by nuclear magnetic resonance (NMR) and high-resolution mass spectrometry (HRMS). Characterization data are as follows.
   I. ¹H NMR (600 MHz, CDCl₃) δ 8.50 (s, 1H), 7.66 (d, *J* = 4.3 Hz, 1H), 7.50 (dd, *J* = 8.4, 5.3 Hz, 2H), 7.45 (d, *J* = 8.3 Hz, 2H), 7.39 (s, 1H), 7.27 (t, *J* = 7.8 Hz, 4H), 7.21 (t, *J* = 8.6 Hz, 2H), 7.12 (d, *J* = 7.9 Hz, 4H), 7.06 (dd, *J* = 12.0, 7.9 Hz, 4H), 7.01 (d, *J* = 4.2 Hz, 1H), 4.55 (t, *J* = 7.4 Hz, 4H), 1.30 (dt, *J* = 20.6, 6.9 Hz, 6H). ¹³C NMR (150 MHz, CDCl₃) δ 166.7, 165.0, 163.7, 151.5, 151.3, 150.9, 149.8, 144.0, 142.4, 139.2, 136.1, 134.1, 133.7, 133.0, 132.1, 130.1, 129.3, 127.6, 126.2, 125.6, 119.3, 119.2, 117.1, 112.6, 46.6, 45.8, 15.0. HRMS (ESI): m/z: calculated (C₄₃H₃₂FN₃O₂S₄) [M⁺]: 769.13614; found, 769.13559.

Next, a stock solution of Probe I (II) is prepared in tetrahydrofuran (THF) at a concentration of 0.1-1.0 mM. Finally, cyanide (CN⁻), hydrazine (N₂H₄) and hypochlorite (ClO⁻) stock solutions are prepared in deionized water at a concentration of 20 mM each.

For fluorescence measurements;

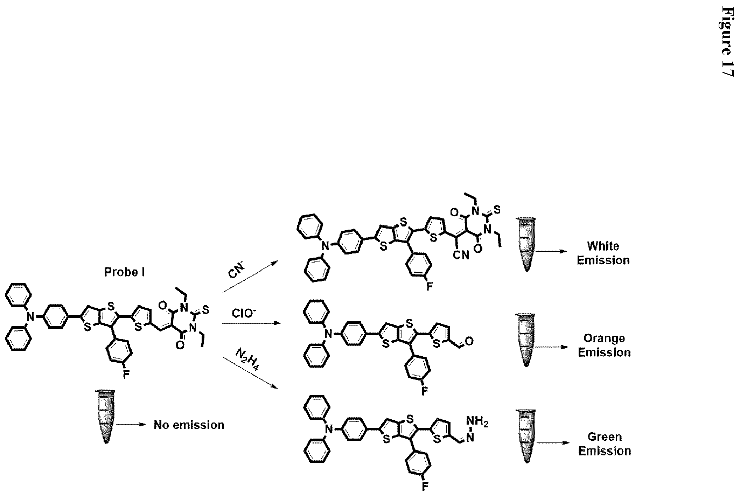

For the cyanide analyte, initially 2 mL of THF is added into the quartz cuvette. 20 µL of 1 mM Probe I (II) stock solution is added into it, and the dye concentration is kept as 10 µM (When Probe I is added into THF solvent, it has a clear purple color). 2-20 µL of 2-20 mM cyanide (CN⁻) stock solution is added. After adding the cyanide, the color of the purple solution turns to transparent immediadetly. This color change is related to cyanide binding to the double bond of barbituric acid by a nucleophilic attack and disrupting the conjugation. This color change is observable with a naked eye without the need for excitation with any light source. The reaction is very fast, and results can be obtained in 30 seconds. After 5 minutes, the reaction is completely over. When the solution obtained from the reaction of Probe I (II) and cyanide (CN⁻ ) is examined under fluorescent light, a white light emission is observed (Figure 17).

For the hydrazine analyte, 2 mL of THF is added into the quartz cuvette. 20 µL of 1 mM Probe I (II) stock solution is added into it and the dye concentration is kept as 10 µM. 2-20 µL of 2-20 mM hydrazine (N₂H₄) stock solution is added into it. After adding the hydrazine, the purple colored solution turns to clear in color immediately. This color change occurs because hydrazine makes a nucleophilic attack to the double bond of barbituric acid, leading to a cleavege of the barbituric acid from the molecule and adding hydrazine to the sensor molecule. This color change is observable with the naked eye without the need for excitation with any light source. The reaction is very fast, and results can be obtained in 30 seconds. After 5 minutes, the reaction is completely over. When the solution obtained from the reaction of Probe I (II) and hydrazine (N₂H₄) is examined under fluorescent light, a green light emission is observed (Figure 17).

Finally, 2 mL of THF is added into the quartz cuvette to detect the hypochlorite analyte. 20 µL of 1 mM Probe I (II) stock solution is added into it and the dye concentration is kept as 10 µM. 2-20 µL of 2-20 mM hypochlorite (CIO⁻) stock solution is added into it. Purple color of the solution turns to yellow immediately after addition of hypochlorite. This color change occurs due to nucleophilic attack of hypochlite to the double bond of barbituric acid, leading the hydrolysis of barbituric acid from the molecule. This color change is observable with a naked eye without the need for excitation with any light source. The reaction is very fast, and the results can be obtained in 30 seconds. After 5 minutes, the reaction is completely over. When the solution obtained as a result of the reaction of Probe I (II) and hypochlorite (CIO⁻) is examined under fluorescent light, an emission of orange light is observed (Figure 17).

All fluorescence measurements are excited at a wavelength of 360 nm, and the emission data is collected between 380-700 nm wavelength values. The excitation and emission slit intervals are selected with a width of 5 nm. All measurements are repeated at least three times. Limits of detection (LOD) for each analyte were found to be 616 nM for cyanide, 8.4 nM for hydrazine and 196 nM for hypochlorite, respectively.

### Industrial Applicability of the Invention

Thanks to this invention, the invented probes could find applications especially in the chemical industry, food industry, mining facilities, polymer industry, textile industry, and automotive industry for determination of cyanide, hydrazine and hypochlorite analytes, environmental analyses (e.g. cyanide, hypochlorite in wastewater, stream), food analysis (e.g. hypochloride in milk and diary products), instant detection of cyanide, hydrazine and hypochlorite analytes in forensic applications (cyanide, hydrazine), using aqueous or paper-based sensor kits.

### REFERENCES

[1] H. Pan, Y. Liu, S. Liu, Z. Ou, H. Chen, H. Li, , Talanta. 202 (2019) 329-335
[2] H. Wu, W. Zhang, Y. Wu, N. Liu, F. Meng, Y. Xie, L. Yan, J. 159 (2020) 105461.
[3] S. Mu, H. Gao, C. Li, S. Li, Y. Wang, Y. Zhang, C. Ma, H. Zhang, X. Liu, Talanta. 221 (2021) 121606

## Claims

1. A compound having the following formula for a simultaneous detection of cyanide, hydrazine and hypochlorite, 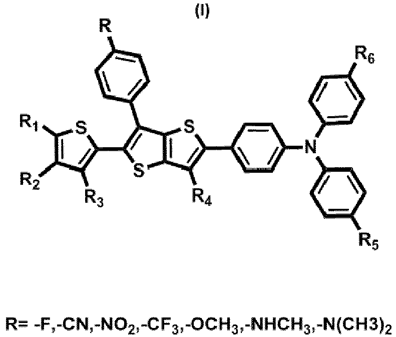
wherein the thiophene and triphenylamine groups are bounded to the carbon atom adjacent to the sulfur atoms of thieno[3,2-b]thiophene,
the carbon atom adjacent to the carbon atom attached to the thiophene ring is a phenyl ring containing an R group,
R is one of -F (fluoride), -CN (cyanide), -NO₂ (nitro), -CF₃ (trifluoromethyl), -OCH₃ (methoxy), -NHCH₃ (methylamine) and -N(CH₃)₂,
R¹,R², R³, R⁴, R⁵ and R⁶ consist of one or more alkyl, aryl, alkenyl, amine, ester, carbonate ester, carbonyl, sulfide, organosilane and thiolate groups from 1 atom to 500 atoms with the same or different chains or having at least one of the functional groups.

2. t Thecompound according to claim 1, having the following formula;

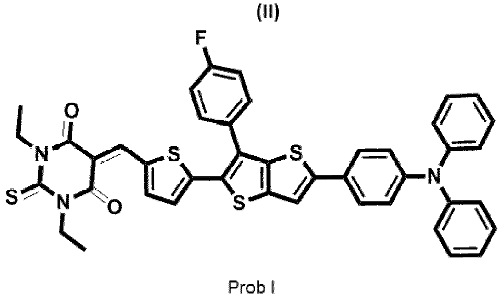

3. A synthesis method of the compound (Probe I) (II) according to claim 2, comprises the steps of;
- intoduction of 1:1 v/v ratio of chloroform: ethanol solvent mixture, 0.1-1.0 mmol of 5-(5-(4-(diphenylamino)phenyl)-3-(4-fluorophenyl)thieno[3,2-b]thiophen-2-yl)thiophene-2-carbaldehyde (III) (1 eq), 1,3-diethyl-2-thiobarbituric acid (IV) (3 eq) between 0.3-3.0 mmol and 10-100 mmol beta- alanine into a reaction flask to obtain a mixture (100 equivalents),
- homogeneous dissolution of the reagents in the reaction flask with a magnetic heater-stirrer,
- adjusting the temperature of the mixture to 60-80°C and continuing the reaction at this temperature for 16-24 hours,
- product formation and monitoring the reaction with thin layer chromatography (TLC),
- after consumption of the starting reagents of (5-(5-(4-(diphenylamino)phenyl)-3-(4-fluorophenyl)thieno[3,2-b]thiophen-2-yl)thiophene-2-carbaldehyde (III) and 1,3-diethyl-2-thiobarbituric acid, precipitation of the the resultant product with methanol at 0-10 °C and filtration to obtain the Probe I sensor molecule (II),
- characterization of the filtered Probe I (II) with nuclear magnetic resonance (NMR) and high-resolution mass spectrometry (HRMS).

4. A method for the simultaneous detection of cyanide, hydrazine and hypochlorite **characterized in that** it comprises the steps of;
a) Preparing the stock solution of the Probe I molecule (II) obtained in Claim 2 in tetrahydrofuran (THF) at a concentration of 0.1-1.0 mM,
b) Preparing the cyanide (CN⁻), hydrazine (N₂H₄) and hypochlorite (CIO⁻) stock solutions in deionized water at a concentration of 2-20 mM each,
c) Adding 0.2-2 mL of THF into an empty quartz cuvette, adding of 2-20 µL of Probe I stock solution at a concentration of 0.1-1.0 mM, and ensuring that the dye concentration in the quartz cuvette is 1-10 µM for fluorescent measurements,
d) Determining the cyanide analyte, after the process step c); addition of 2-20 µL of 2-20 mM cyanide (CN⁻) stock solution into the cuvette, immediate change of the purple color of the solution into transparent, observation of a white emission when the relevant solution is examined under a fluorescent light (fluorescent measurement),
e) Determining the cyanide analyte, after the process step c), addition of 2-20 µL of 2-20 mM hydrazine (N₂H₄) stock solution into the cuvette, immediate change of the purple solution color into transparent, observation of a green light emission when the relevant solution is examined under a fluorescent light (fluorescent measurement),
f) Determining the cyanide analyte, after the process step c), addition of 2-20 µL of 2-20 mM hypochlorite (ClO⁻) stock solution into the cuvette, immediate change of the purple solution color into transparent, observation of an orange light emission when the relevant solution is examined under a fluorescent light (fluorescent measurement).

5. The method according to Claim 4, **characterized in that** all fluorescence measurements are carried out by excitation at a wavelength of 360 nm, and emission data are collected between 380-700 nm wavelength values, excitation and emission slit intervals are selected with a width of 5 nm.

6. The measurements according to claims 4 and 5, **characterized in that** all measurements are repeated at least three times.
